# EUROPEAN PATENT APPLICATION

(11) **EP 2 267 513 A1**
(43) Date of publication of application: **29.12.2010**
(21) Application number: 09722698.9
(22) Date of filing: 24.02.2009
(51) Int. Cl.: G02C 7/00, B05D 3/12, B05D 7/00, G02B 1/10

(54) **METHOD FOR PRODUCING PLASTIC LENS**

(30) Priority: 17.03.2008 JP 2008068400; 20.10.2008 JP 2008270154
(71) Applicant: Hoya Corporation, Tokyo 161-8525 (JP)
(72) Inventor: ISHIZAKI, Takako, Tokyo 161-8525 (JP); UCHIDA, Katsuaki, Tokyo 161-8525 (JP)
(74) Representative: Betten & Resch
(86) International application number: PCT/JP2009/053257
(87) International publication number: WO 2009/116362

(57) **Abstract**

In securing adhesion of a hard coat layer to be formed on the surface of a plastic lens, modification of the lens surface is carried out without using an abrasive, and thereby the cleaning time after modification is shortened.

A rubbing step (S1) to rub the surface of a plastic lens substrate using a removing member, and a step (S4) of forming a hard coat layer on the rubbed surface of the plastic lens substrate by means of a wet surface treatment are included. The removing member has flexibility, and is made of a hard material that is harder than the material of the surface of the lens substrate or has such constitution that a hard material is fixed on a base material having flexibility.

## Description

### Technical Field

The present invention relates to a method for producing a plastic lens for spectacles, and in particular relates to a method for producing a plastic lens, including a step of forming a hard coat layer on the surface of a plastic lens substrate.

### Background Art

Recently, as lenses for spectacles, plastic lenses are frequently used in place of glass lenses. This results from that the plastic lens has advantages that it is light, hard to be broken, and easy to be processed and formed, as compared with the glass lens.
On the other hand, the plastic lens has a disadvantage of being easy to be scratched, and to prevent this, it is also practiced to form a hard coat layer on the surface of a plastic lens to strengthen surface hardness of the plastic lens.

However, generally, when forming a hard coat layer on the surface of a plastic lens substrate, because of problems in the characteristics of the plastic lens substrate, there is a problem that the hard coat layer is hard to tightly adhere on the surface of the plastic lens substrate, and is hard to be formed if the surface of the lens substrate remains as it is. Therefore, several proposals for improving adhesion between the hard coat layer and the plastic lens substrate have been made.

For example, a method has been proposed, in which when forming a hard coat layer on a plastic lens substrate, before coating the lens substrate with a hard coat liquid, cleaning and modification of the surface of the lens substrate are carried out by spraying an abrasive on the surface (the surface to be coated) of the lens substrate or by scratching the surface of the lens substrate with an abrasive (see Patent Document 1). The technique described in Patent Document 1 enhances a so-called anchor effect that a film coating solution gets into scratches formed on the surface of a lens substrate, and enhances adhesion between a hard coat film and the surface of the lens substrate.

Also, a technique to apply a hard coat layer to the surface of a plastic lens substrate has been proposed, in which plasma processing is applied to the surface of the plastic lens substrate, and thereafter, mechanical cleaning is carried out using a neutral detergent and an abrasive together (Patent Document 2). In the technique described in Patent Document 2, by carrying out double modification by means of plasma processing and mechanical cleaning using an abrasive, adhesion between the hard coat layer and the lens substrate surface is improved, and thereby it becomes possible to prevent detachment of the hard coat layer.

Also, a method has been proposed to cause a primer layer to intervene between a plastic lens substrate and a hard coat layer (see Patent Document 3). In the technique described in Patent Document 3, adhesion between a hard coat layer and a plastic lens substrate is improved by causing a primer layer to intervene between the hard coat layer and the lens substrate. Thus, by forming a hard coat layer on the surface of a plastic lens substrate, the abrasion-resisting property, the drug-resisting property, the hot-water resisting property, the heat-resisting property, the weather-resisting property (property that a change of properties, such as deformation, discoloration, deterioration, etc., is hard to be caused when plastics, coating materials, etc. are used outdoors), etc. of a plastic lens are improved. Note that in Patent Document 3 a method of rubbing a lens substrate using an abrasive consisting of inorganic or organic particulates is described as a method for effectively improving adhesion between a plastic lens substrate and a primer layer.

Patent Document 1: Japanese Unexamined Patent Application Publication No. 5-70615
Patent Document 2: Japanese Unexamined Patent Application Publication No. 11-316302
Patent Document 3: Japanese Unexamined Patent Application Publication No. 2001-288406

### Disclosure of the Invention

### Problems to be Solved by the Invention

As described above, each of the techniques described in Patent Documents 1-3 modifies the surface of a plastic lens substrate, using an abrasive. Specifically, foreign substances precipitated or adhered on the surface of a plastic lens substrate are physically removed with an abrasive, and also, in addition to physical removal of foreign substances, the surface of the lens substrate is roughed, and thereby formation of a hard coat film is facilitated.
However, if particulates of the abrasive used for roughing the surface of a plastic lens substrate are not surely removed from the surface of the lens substrate, there is a problem that irregular reflection of light, is caused by the particulates when a film of a hard coat layer or primer layer has been formed on the surface of the lens substrate. This is because that the particulates of the abrasive which have not been removed become bright spots or defects and irregularly reflect light. Further, sometimes stripping-off and/or floating of the film are caused by residues of abrasive grains.

Thus, when modification of the surface of a plastic lens has been carried out using an abrasive, abrasive grains of the abrasive remain on the surface of the plastic lens, so that it is necessary to carefully carry out cleaning processing after the modification, and a considerable amount of time becomes necessary for the cleaning step for cleaning processing. Also, depending on the shapes of particles of the abrasive and the amount of use of the abrasive, there is a fear that aggregation of abrasive particles is caused and variation is caused in scratches formed by abrasive particles. If the scratches become deep exceeding an allowable range, it leads to increasing of the percent defective in completed plastic lens products such as spectacle lenses, etc.

The object of the present invention in view of the above-described problems is to carry out modification of the surface of a plastic lens substrate without using an abrasive and thereby shorten the cleaning time after modification of the surface of the plastic lens substrate, in ensuring adhesion of a hard coat layer to be formed on the surface of the plastic lens substrate.

### Means for Solving the Problems

The solve the above-described problems, a method for producing a plastic lens according to the present invention includes following steps;
(1) A step of rubbing the surface of a plastic a lens substrate with a removing member
(2) A step of forming a hard coat layer on the rubbed surface of the plastic lens substrate by a wet surface treatment.
The present invention is **characterized in that** the removing member used in the above-described step (1) has flexibility, and the removing member is constituted by a material that is harder than the material of the surface of the lens substrate as a rubbing target, or constituted such that a hard material is fixed on a base material having flexibility.
With such configuration described above, the hard material of the removing member can surely remove foreign substances adhered on the surface of a plastic lens substrate. Also, because the removing member has flexibility, it is possible that the removing member will never allow removal residues to be produced, or that even if removal residues are produced, the removal residues are wiped out.

The word "plastic lens substrate" refers to a plastic lens substrate immediately before a hard coat layer is formed. Accordingly, it does not simply refer to a plastic lens substrate (lens blank) to which a surface treatment has not been applied at all. For example, a lens which includes a primer layer for improving adhesion of a hard coat layer and impact-resisting property of a plastic lens is included in the plastic lens substrate. In this case, the target surface which the removing member rubs in the above-described rubbing step is the surface of the primer layer which is exposed outward before a hard coat layer is formed. Also, in some plastic lenses having a photochromic function (so-called photochromic lenses), a hard coat layer is formed on a photochromic layer. In this case, the target surface which the removing member rubs in the above-described rubbing step is the surface of the photochromic layer exposed outward before the hard coat layer is formed.

The word "removing member" refers to the one having flexibility, which is formed of a hard material harder than the material of the surface of a plastic lens substrate, or in which a hard material is fixed on a base material. "The hard material harder than the material of the surface of a plastic lens substrate" is dependent on the constitution of a lens substrate as the rubbing target, and it is possible to select the material according to the quality of the material of the surface of the lens substrate in the rubbing step. For example, different materials may be selected between when rubbing a lens substrate having a primer layer on the surface thereof and when rubbing the surface of a plastic lens substrate itself. Also, the removing member may be a woven or nonwoven cloth or a sponge, made of a hard material, or a so-called abrasive sheet in which hard abrasive grains have been fixed to a woven or nonwoven cloth or a sponge as a relatively soft base material. What matters is that foreign substances on the surface of a lens substrate can be wiped out if a hard material touches the lens substrate as the rubbing target.

As described above, if such a removing member is used, residues originated from the removing member hardly remain during or after the rubbing step, and even if residues remain, the residues can be easily removed because of the flexibility of the removing member.
As preferable removing members given are, for example, a plastic foam (sponge) which is a very minute porous body, an elastomer with a texture like a plastic eraser, and a woven or nonwoven cloth constituted of fine strings. Also, included in the removing member here are an abrasive sheet, such as a woven or nonwoven cloth, a sheet, a film, etc., in which abrasive grains of an abrasive are fixed, and a plastic foam and an elastomer, in which abrasive grains are fixed on the surface.

According to the present invention, foreign substances floating on the surface of a plastic lens substrate can be securely removed by rubbing the surface of the lens substrate using a removing member as described above. The adhesion condition of a hard coat layer, which is dependent on foreign substances present in the adhesion surface boundary, can be favorably improved. Also, coloring and loss of transparency of a plastic lens product due to such foreign substances can be prevented.
Further, in the case of background art using an abrasive using loose abrasive grains, secondary contamination of a plastic lens substrate is caused by dispersion of abrasive grains, and a lot of effort is required for removal of such contamination, however, in the present invention, because no loose abrasive grains are used, there is no fear of secondary contamination of the plastic lens substrate caused by abrasive grains.

A preferable embodiment forms scratches on the surface of a plastic lens substrate, in addition to removal of foreign substances, in the above-described rubbing step.
The word "scratch" refers to a minute groove. Because the area of the boundary surface of a hard coat layer and a plastic lens substrate is widely secured by minute grooves, adhesion of the hard coat layer by an anchor effect is also improved. Note that the refractive index of a hard coat layer is generally approximate to the refractive index of a so-called lens blank which is a plastic lens substrate before a treatment. Accordingly, when forming a hard coat layer, if the hard coat layer is hardened in a condition that a coating liquid has entered in grooves, the grooves will not be visible. According to the present embodiment, the adhesion state of the boundary surface of a hard coat layer and a plastic lens substrate will be more favorably secured.

A preferred embodiment further includes a step of chemically edging a plastic lens substrate.
The order of "the step of chemically edging" is not limited, and may be carried out before or after the rubbing step. Also, it is not limited to carrying out "the step of chemically edging" following the rubbing step.
Note that the word "chemically edging" here refers to edging using an acid solution, an alkaline solution, etc., and edging methods using an oxidizing agent or a reducing agent, and is not limited to edging or edging methods using particular solutions.

When carrying out acid edging, it is good to use volatile acid such as a hydrochloric solution, a nitric acid solution, a perchloric solution, etc., with which acid residues are hard to remain after edging. When carrying out alkali edging, it is good to use a highly water-soluble alkali solution such as an aqueous solution of sodium hydroxide, an aqueous solution of potassium hydroxide, etc. By using such an alkali aqueous solution, cleaning after edging can be easily carried out. Also, when carrying out oxidation-reduction edging, hydrogen peroxide water and ozone water may be used, and arranging a plastic lens substrate in an atmosphere containing ozone is also included in the chemical edging herein referred to.
Particularly preferable is to use an alkaline aqueous solution as the edging agent in the chemical edging step. The alkaline aqueous solution can suitably carry out modification of the substrate surface, and can improve the wetness-spreading condition of a hard coat liquid as well.

Further, it is preferable that the rubbing step is carried out in a wet environment.
The kind of liquid for realizing the wet environment is not limited. It is sufficient if the liquid is the one that can realize wettability without changing properties of the components constituting the surface of the rubbing target and without causing changes of properties of the removing member used in rubbing, and it is possible to properly select and use water, an aqueous solution, an organic solvent, an organic solution, various kinds of mixed solutions, etc.

The present invention may be favorably applied to a plastic lens in which a primer layer is provided at least to one side thereof.
It occurs in this case that the primer layer is eroded by an alkaline solution, etc. Also, to ensure adhesion of a hard coat layer by chemical edging only, there is a case that the lens substrate must be dipped in a reagent for edging for a sufficient period of time. According to the method of the present invention, it is possible to improve adhesion of a hard coat layer by the rubbing step. Also, it is possible to shorten the period of time for carrying out chemical edging. According to the present invention, even in the case of producing a plastic lens having a primer layer, it is possible to suitably ensure adhesion of a hard coat layer, without damaging the primer layer.

It is preferable that the removing member used in the present invention is an abrasive sheet constituted by fixing abrasive grains.
Here, the abrasive sheet constituted by fixing abrasive grains refers to an abrasive sheet in which abrasive grains are fixed by an adhesive agent, etc. on a sheet having flexibility, such as cloth, paper, etc., in a condition before rubbing processing is carried out. For the abrasive sheet, it is possible to use coated abrasives, such as abrasive paper (sandpaper) in which abrasive grains are fixed to paper, an abrasive cloth (sand cloth) in which abrasive grains are fixed to a woven or unwoven cloth, etc., and in addition, abrasive pads, abrasive sponges, etc. In the case of coated abrasives, it is preferable that the particle diameter at 50% of a cumulative sedimentation height by an electrical resistance test method is about 10µm or below (i.e., the so-called particle size is #1500 or above).
According to the constitution as described above, it is possible to physically rip off foreign substances adhered on the surface of a plastic lens substrate by abrasive grains and to damage the surface by abrasive grains to form scratches on the surface. As described above, due to formation of such scratches on the surface of a plastic lens substrate, it is possible to improve adhesion between the plastic lens substrate and a hard coat layer by the anchor effect.

Also, it is preferable that the above-described abrasive grains are diamond. The diamond has advantages that a change in properties and dissolution are not caused by acid, alkali, oxidant, reductant, and organic solution, and that if diamond abrasive grains are adopted, even if rubbing processing is carried out immediately after chemical edging processing, it will never occur that minute abrasive grains react to the edging agent.
Further, because diamond is very hard, if diamond abrasive grains are adopted, it hardly occurs that abrasive grains are crushed by the rubbing step. Accordingly, a large change is hard to occur in the shapes of scratches formed by respective pieces of abrasive grains. Therefore, it is possible to form stable scratches.

In the present invention, it is preferable even if the removing member is a melamine resin foam body (melamine foam) . The melamine resin foam body is formed by causing melamine, which is a hard plastic, to foam by minute bubbles. Accordingly, the hard plastic can not only wipe off foreign substances on the substrate surface of a lens but also, even when foreign substances adhere on the surface, can remove the foreign substances by scraping off. Also, at this time, because scraped-off foreign substances adsorb to the holes of the melamine foam, it can be surely prevented that scraped-off foreign substances remain as residues on the surface of a plastic lens substrate.
Further, when the rubbing step is carried out in a wet environment, a capillary action occurs that liquid components for realizing the wet environment are soaked up toward the holes of the melamine foam. The foreign substances scraped off and finely crushed are collected to the inside of the holes of the melamine foam by the capillary action. As a result, residues of foreign substances become hard to remain on the lens surface.

As described above, according to the present invention, by rubbing the surface of a plastic lens substrate using such a removing member before forming a hard coat layer by a wet surface treatment, the surface of the plastic lens substrate can be more equally modified while suppressing a variation, and thereby adhesion of the hard coat layer can be enhanced. And, because it is avoided our almost suppressed that abrasive grains remain on the surface of a plastic lens substrate, compared with a case of using an abrasive using so-called loose abrasive grains in which abrasive grains are not fixed, it becomes possible to dramatically shorten the period of time for the subsequent cleaning step.

### Effects of the Invention

According to the present invention, it is possible to modify the surface of a plastic lens substrate without using an abrasive, to secure adhesion of a hard coat layer, and to shorten the period of time for a cleaning step after surface modification.

### Brief Description of Drawings

Fig. 1 is a flowchart illustrating steps of a method for producing a plastic lens, as an example of the first embodiment of the present invention.
Fig. 2 is a microscope photograph of a lens substrate when the lens substrate has been rubbed using an abrasive sheet (#1500) for the removing member.
Fig. 3 is a microscope photograph of a lens substrate when the lens substrate has been rubbed using an abrasive sheet (#3000) for the removing member.
Fig. 4 is a microscope photograph of a lens substrate when the lens substrate has been rubbed using an abrasive sheet (#6000) for the removing member.
Fig. 5 is a microscope photograph of a lens substrate when the lens substrate has been rubbed using a melamine foam for the removing member.
Fig. 6 is a flowchart illustrating a method for producing a plastic lens, as an example of the second embodiment of the present invention.
Fig. 7 is a flowchart illustrating a method for producing a plastic lens, as an example of the third embodiment of the present invention.
Fig. 8 is a flowchart illustrating a method for producing a plastic lens, as an example of the fourth embodiment of the present invention.
Fig. 9 is a diagram for explaining rubbing processing in examples of embodiments of the present invention.
Fig. 10 is a diagram for explaining a method for evaluating adhesion of a hard coat layer to the plastic lens substrate in examples of embodiments of the present invention.

### Best Mode for Carrying Out the Invention

Below, examples of embodiments for carrying out the present invention will be described, however, the present invention is not limited to the following examples. In the following examples, a case that the present invention is applied to a method for producing a plastic lens for spectacles will be illustrated, however, in addition, it is possible to apply the present invention to other plastic lenses if they are ones in which a hard coat layer is formed on the surface.

### (Example of First Embodiment)

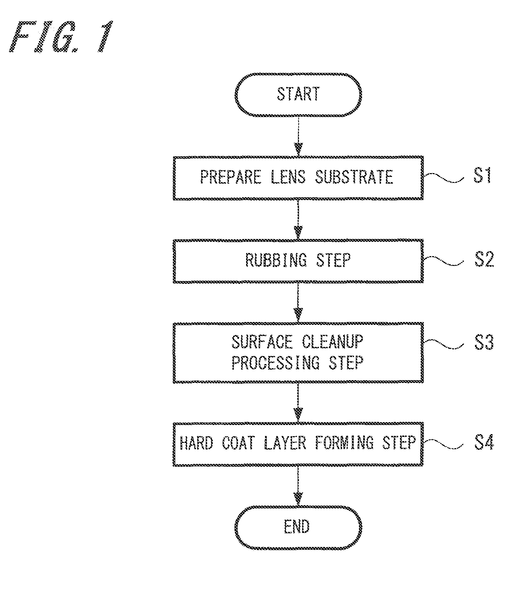

Fig. 1 is a flowchart illustrating steps of a method for producing a plastic lens, as an example of the first embodiment of the present invention.
First, referring to Fig. 1, description will be made with respect to the example of the first embodiment of the present invention. Initially, a plastic lens substrate, which will be formed into spectacles, is prepared (step S1). As the plastic lens substrate, generally, a thiourethane lens is used, however, in addition to that, it may be a CR39 (allyl diglycol carbonate) lens which is a standard product having a high refractive index, and also the method can be favorably applied to a sulfide urethane lens substrate.

Next, rubbing processing is carried out to the surface of the prepared plastic lens substrate with a removing member (step S2). The removing member will not be limited in particular if it is the one made of a material that can remove foreign substances adhered to the surface of the plastic lens substrate. Preferably, given are a sponge-like plastic foam body formed of a hard plastic material, an abrasive sheet in which abrasive grains are fixed to a sponge, a woven or unwoven cloth, etc. By rubbing the surface of the lens substrate using such a removing member, foreign substances adhered to the surface can be surely removed. Further, if a hard plastic foam body that is harder than the material of the plastic lens substrate or an abrasive sheet is adopted, the surface of the plastic lens substrate can be roughened, which is preferable. By using such a removing member, an abrasive containing loose abrasive grains will not be used, so that it is possible to suppress or almost avoid that abrasive grains and/or removal residues (shavings) remain on the surface of a plastic lens substrate. Also, it can be avoided that accidental scratches are left on the surface of the lens substrate, which will be caused by aggregation of loose abrasive grains. That is, it is possible to avoid that scratches become large to a visible level with respect to the width and depth after forming a hard coat layer after rubbing processing.

When an abrasive sheet is used for the removing member, with respect to abrasive grains, it is preferable that the particle diameter at 50% of a cumulative sedimentation height by an electrical resistance test method is about 10µm or below. Specifically, an abrasive sheet defined, by the particle size of #1500 or above as prescribed in JIS "R6010" is preferable. When an abrasive sheet, such as a coated abrasive of #1500 or above, etc., is used, adhesion of a hard coat layer which will be formed after rubbing can be maintained reliably and satisfactorily. Also, even if an abrasive sheet is used, in which the particle diameter of each abrasive grain at 50% of a cumulative sedimentation, height is smaller than 0.1µm, the abrasive grains are too fine to obtain desired scratches, and desired adhesion becomes hard to be secured. For the abrasive sheet that is used in rubbing processing, it is preferable to use the one in which the particle diameter of each abrasive grain at 50% of a cumulative sedimentation height is 0.1µm or above and 10µm or below.

Also, as the material of abrasive grains that are fixed to the abrasive sheet, various materials can be used, such as, corundum (alumina), silicon carbide, boron carbide, diamond, boron nitride (CBN), cerium oxide, chrome oxide, zirconium oxide, silicone oxide, ferric oxide (Fe₂O₃, colcothar), etc. In particular, if abrasive grains made of a hard material are used, such as diamond, boron nitride, silicone carbide, boron carbide, corundum, etc., the phenomenon that abrasive grains are crushed at the time of rubbing and thereby abrading performance decreases and the phenomenon that crushed products of abrasive grains are freed from the abrasive sheet and attached to the substrate are suppressed, which is preferable.

When a sponge-like plastic foam body is used for the removing member, it is good to adopt a foam body made of a hard material that is harder than the plastic base material forming a surface to be rubbed. If such a material is selected, even if it is a plastic foam body, it is possible to roughen the surface during the rubbing step. For example, hard urethane foam and melamine foam may be used for a plastic lens using a polyurethane material or a polycarbonate material. Also, it is good to use melamine foam for a plastic lens using thiourethane, allyl diglycol carbonate (so-called CR39), episulfide resin, etc., which are relatively hard plastic materials.

### (Test Observation)

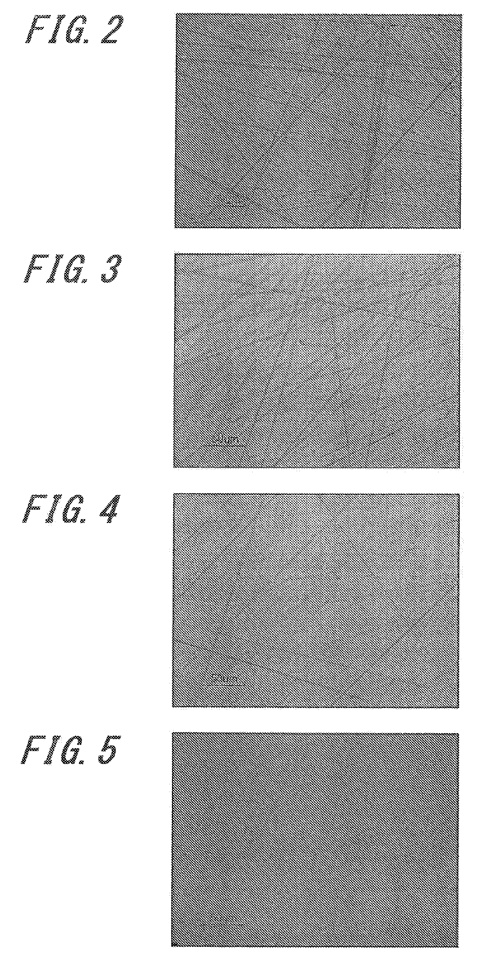

Using an abrasive sheet in which abrasive grains of different particle sizes are fixed, a plastic lens substrate was rubbed by human hands in a wet environment, and results of microscopic observation are illustrated in Fig. 2 through Fig. 4.
Fig. 2 illustrates a microscope photograph of a surface of a thiourethane lens substrate (refractive index ne: 1.67, produced by HOYA CORPORATION, product name: EYNOA (hereinafter referred to as "thiourethane lens substrate)) when the surface has been rubbed using a diamond coated abrasive #1500 in which diamond abrasive grains are fixed to a raised woven cloth (produced by NORITAKE COATED ABRASIVE CO., LTD., product name: diamond coated abrasive (hereinafter simply referred to as "diamond coated abrasive)).
Fig. 3 is a microscope photograph of a surface of a thiourethane lens substrate when the surface has been rubbed using a diamond coated abrasive #3000.
Fig. 4 is a microscope photograph of a surface of a thiourethane lens substrate when the surface has been rubbed using a diamond coated abrasive #6000.
Fig. 5 is a microscope photograph of a surface of a thiourethane lens substrate when the surface has been rubbed using a melamine foam (produced by LEC, INC.).
Note that a line segment shown in the lower left part in Fig. 2 through Fig. 5 illustrates the length of 50µm.

As illustrated in Fig. 2 through Fig. 5, when rubbing was carried out to a plastic lens substrate using an abrasive sheet in which diamond abrasive grains are fixed or a melamine foam, it was found that straight minute scratches are formed in the plastic lens substrate. These minute scratches can improve adhesion between the lens substrate and a hard coat layer. Also, the minute scratches as such are filled by a subsequent surface treatment, and will be never visible to human eyes. Also, in the areas illustrated in Fig. 2 through Fig. 5, abrasive grains are not observed. Accordingly, it is understood that remaining of abrasive grains can be almost avoided or sufficiently suppressed.

Referring to Fig. 1 again, description will be made with respect to steps after rubbing processing. Next to the rubbing step, the plastic lens substrate that has been completed with respect to rubbing processing is subjected to surface cleanup processing by means of ultrasound cleaning, etc. (step S3). Thereafter, the plastic lens substrate is dipped in a hard coat solution as described later, and a hard coat layer is formed on the plastic lens substrate (step S4). Note that in this case, the surface cleanup processing step is provided as step S3, however, this cleanup processing step is not always necessary. Further, when the surface cleanup processing step is provided also, remaining of abrasive grains can be almost avoided or sufficiently suppressed as described above in the present invention, so that it becomes possible to shorten the cleaning time.

### (Example of Second Embodiment)

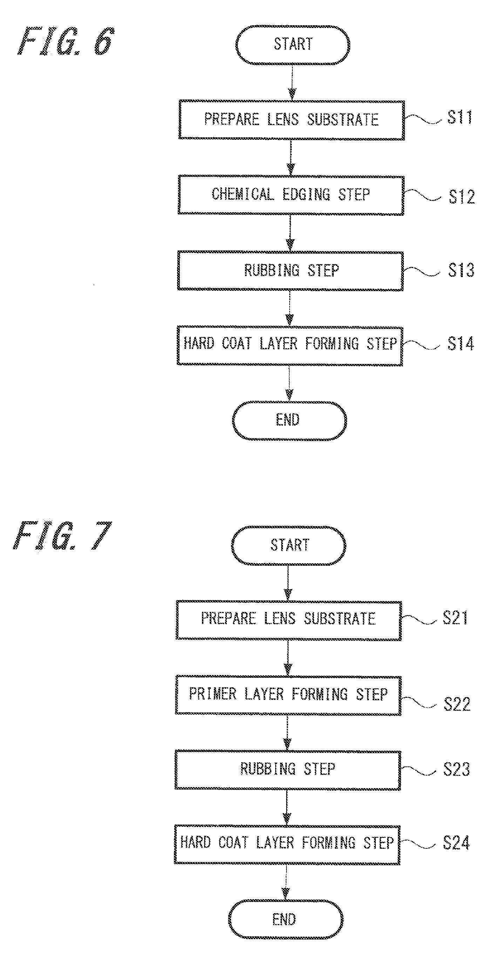

Fig. 6 is a flowchart illustrating a method for producing a plastic lens, as an example of the second embodiment of the present invention. Points that the method illustrated in Fig. 6 is different from the method illustrated in Fig. 1 are that a chemical edging step by means of alkali solution cleaning, etc. is included before the rubbing step and that the surface cleanup processing step after the rubbing step is omitted.
In this example, as illustrated in Fig. 6, a lens substrate is prepared (step S11), and processing by a test reagent for chemical edging is carried out (step S12). Thereafter, after a rubbing step using an abrasive sheet (step S13), a hard coat layer forming step is carried out (step S14).
Thus, in the present embodiment even if the chemical edging step is not carried out after the rubbing step, rubbing residues hardly remain after the rubbing step, so that it is possible to proceed thereafter to the hard coat layer forming step. That is, it is possible to carry out the chemical edging step before the rubbing step for any reason, and another chemical edging processing becomes unnecessary thereafter.

### [Example of Third Embodiment]

Fig. 7 is a flowchart illustrating a method for producing a plastic lens, as an example of the third embodiment of the present invention. Points that the method illustrated in Fig. 7 is different from the method illustrated in Fig. 1 are that a step of forming a primer layer (step S22) is included before a rubbing step (step S23) and that the surface cleanup processing step after the rubbing step is omitted. Further, different points from the method illustrated in Fig. 6 are that a primer layer is formed before the rubbing step and that the chemical edging step is omitted.

The present invention can secure adhesion of a hard coat layer only by rubbing processing, without carrying out chemical edging processing such as alkali cleaning, etc. as described above, so that when forming a primer layer as described above, there is an advantage that the material of the primer layer is not limited to those having chemical stability such as alkali resistance, etc. That is, when carrying out chemical edging processing, the material of the primer layer is required to be the one that can maintain impact resistance and adhesion of the primer layer even when a test agent for edging adheres to the primer layer, however, when the present invention is applied, such characteristics need not be considered, and it is possible to enhance selection freedom for the material of the primer layer.

### [Example of Fourth Embodiment]

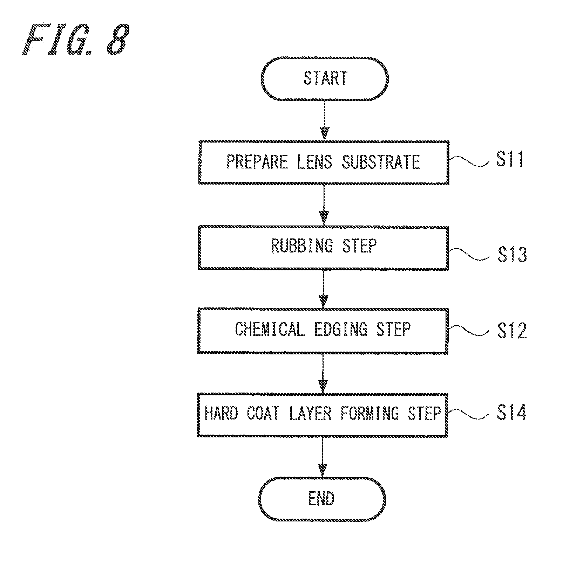

Fig. 8 is a flowchart illustrating a method for producing a plastic lens, as an example of the fourth embodiment of the present invention. The example of the fourth embodiment of the present invention carries out the chemical edging step (step S12) of the method illustrated in Fig. 6 after the rubbing step (step S13). According to this method, after completion of the rubbing step (physical edging) of step S13, washing with a test agent for chemical edging is carried out, so that even if rubbing residues, etc. adhere to the surface of a plastic lens, it is possible to reliably wash away such residues.

### (Examples)

Next, production methods of the present embodiments and plastic lenses produced by such methods are illustrated as more concrete examples, and description will be made with respect to results of evaluating adhesion between the plastic lens substrate and the hard coat layer.

### <Evaluation 1>

First, using a sand cloth for the abrasive sheet to be used for the removing member, it was confirmed that rubbing processing using the sand cloth (Example 1) produces the same effects as rubbing processing using an abrasive (Comparative Example 1). Also, the case that rubbing processing is not carried out (Comparative Example 2) was confirmed.

### [Example 1]

In this example, processing illustrated in the flowchart of Fig. 1 was carried out and a hard coat layer was formed on a plastic lens. Samples (Sample Nos. 1-4) rubbed in the rubbing step using a sand cloth of #1500 and samples (Sample Nos. 5-8) rubbed in the rubbing step using a melamine foam were produced. Hard coat layers were formed on lens substrates made of the same material by carrying out the same processing, and evaluation of adhesion was carried out.

First, as the plastic lens substrate to be prepared in step S1, a thiourethane lens substrate (refractive index ne: 1.67, produced by HOYA CORPORATION, product name: EYNOA) was prepared.
Next, as step S2, rubbing processing was carried out to four pieces of substrates (Sample Nos. 1-4), using a diamond coated abrasive #1500 (product name) produced by NORITAKE COATED ABRASIVE CO., LTD. for the removing member, and to another four pieces of substrates (Sample Nos. 5-8), using a melamine foam produced by LEC, INC. for the removing member. At this time, rubbing processing was carried out in a running water environment.

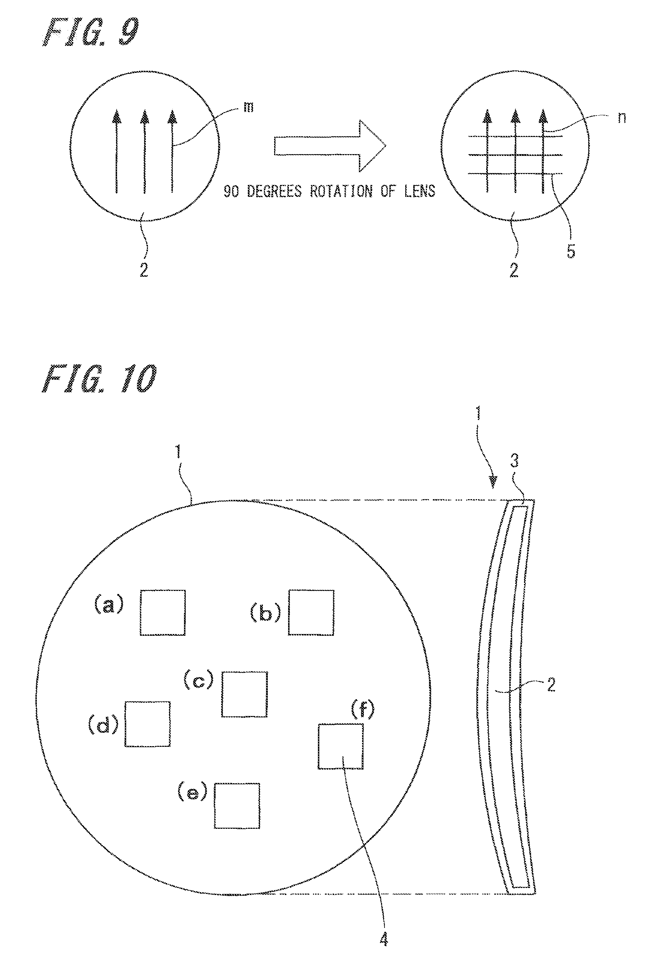

As rubbing processing, as illustrated in Fig. 9, first, a plastic lens substrate 2 was rubbed ten times back and forth in a direction as indicated by an arrow m. Thereafter, the plastic lens substrate 2 was rotated 90 degrees, and rubbed ten times more back and forth, as indicated by an arrow n, in a direction substantially perpendicular to scratches 5 produced by the above-described rubbing. The load at the time of rubbing was set in the range of 300-400G when a diamond coated abrasive was used and in the range of 750-800G when a melamine foam was used.
Thereafter, as step S3, after wiping the surface of the substrate with a cloth which holds acetone, while 28kHz ultrasonic waves are being applied, surface cleanup processing was carried out for 300 seconds, using ion-exchanged water. After ultrasonic wave cleaning, it was dried under a 70°C atmosphere.

Lastly, proceeding to the hard coat layer forming step (step S4), processing of the following three stages was carried out. First, as the first stage, the plastic lens substrate was dipped in a hard coat composition liquid for 30 seconds by a dipping method. Then, as the second stage, the plastic lens substrate dipped in the hard coat composition liquid was drawn up at the speed of 30cm/minute. As the third stage, the drawn up plastic lens substrate was heated for 60 minutes at the temperature of 110°C, and thereby the hard coat composition liquid was hardened and the hard coat layer was formed. The refractive index (ne) of the hard coat layer thus formed was 1.65.

Here, description will be made with respect to the process of making a hard coat composition liquid. First, under a 5°C atmosphere, as solvent, 30 parts by mass of diacetone alcohol (DAA) and 2.7 parts by mass of Y-aminopropyltriethoxysilane were mixed. Then, to this mixed liquid, 3.0 parts by mass of γ-isocyanatopropyltriethoxysilane were dropped while being stirred, and the mixed liquid was stirred 4 hours. Thereafter, after 69.8 parts by mass of γ-glycidoxypropyltriethoxysilane were mixed, hydrochloric acid of 0.01 mot/liter density was dropped while being stirred, and the liquid was stirred day and night for one day. Thereby, a hydrolyzed silane coupling agent, which is one component of the hard coat composition liquid, was obtained.

Subsequently, under a 5°C atmosphere, while stirring separately prepared 180 parts by mass of modified oxidized zirconium-stannic oxide composite methanol sol (produced by NISSAN CHEMICAL INDUSTRIES, LTD.), 20 parts by mass of diacetone alcohol (DAA) and 80 parts by mass of propylene glycol monomethyl ether (PGM) were mixed. Then, while stirring this mixture, 62.5 parts by mass of modified oxidized titanium-tin oxide-oxidized silicon-oxidized zirconium composite methanol sol (produced by JDC CATALYSTS AND CHEMICALS, LTD., formerly CATALYSTS AND CHEMICALS INDUSTRIES, CO., LTD., product name: OPTOLAKE 1120Z) was further mixed, and the mixture was stirred one hour. Thereafter, while continuing stirring, the silane coupling agent previously produced was dropped, and it was stirred day and night for one day.
Then, 0.25 parts by mass of a silicone surface-activating agent (produced by DOW CORNING TORAY CO., LTD., product name: Y-7006) and 5 parts by mass of aluminum tris-acetylacetonate were sequentially added, and it was stirred 150 hours. The obtained solution was filtered by a 0.5µm filter, and thereby a hard coat composition liquid was obtained.

As described above, for the hard coat composition liquid, a liquid is used, in which the ratio of inorganic compound particles, such as tin oxide, oxidized zirconium, oxidized silicone, oxidized titanium, etc., is about 20%, the ratio of a silane coupling agent (γ-glycidoxypropyltriethoxysilane) is about 20%, and the ratio of an alcohol solvent, such as methanol, 1-methoxy 2-propanol, 4-hydoxy-4-methyl-2-pentanone, etc., is about 55%. The balance, which is about 5%, is an additive agent such as a leveling agent, etc.

With the above-described method, two pairs of lenses (for two kinds of removing members), 4 pieces each, 8 pieces in total, were made, and adhesion between the plastic lens substrate and the hard coat layer of each lens was confirmed by a test. The details of the adhesion test will be described later. And, a result of confirming adhesion of 8 pieces of lens samples is illustrated in the following Table 1, the 8 pieces of lens samples corresponding to Sample Nos. 1 through 8 of Example 1.

**Table 1**

| | Sample No. | Example 1 | Comparative Example 1 | Comparative Example 2 |
|---|---|---|---|---|
| Result | 1 | 100 | 100 | 0 |
| | 2 | 100 | 100 | 0 |
| | 3 | 100 | 100 | 0 |
| | 4 | 100 | 100 | 0 |
| | 5 | 100 | - | 0 |
| | 6 | 100 | - | - |
| | 7 | 100 | - | - |
| | 8 | 100 | - | - |

### (Comparative Example 1)

In Comparative Example 1, a sponge holding an abrasive (produced by FUJIMI INCORPORATED, product name: POLIPLA 103H) was used in the rubbing step (step S2). The conditions of rubbing processing (rubbing direction, number of times of rubbing, load at the time of rubbing) were the same as those in Sample Nos. 1 through 4 of the above-described Example 1. Also, the surface cleanup processing step (step 33) and the hard coat layer forming step (step S4) were the same as those for Example 1. Four pieces of lenses were made with this method, and under the same conditions as in Example 1, adhesion between the hard coat layer and the plastic lens substrate was confirmed by a test. A result of this is shown in Table 1. above, the four pieces of lenses corresponding to Sample Nos. 1 through 4 of Comparative Example 1.

### (Comparative Example 2)

In Comparative Example 2, except that the rubbing step (step S2) was omitted, the surface cleanup processing step (step S3) and the hard coat layer forming step (step S4) were carried out under the same conditions as in Example 1. Five pieces of lenses were made with this method, and adhesion was similarly confirmed by a test. A result, of this is shown in Table 1, the five pieces of lenses corresponding to Sample Nos. 1 through 5 of Comparative Example 2.

### (Evaluation of Adhesion of Hard Coat Layer)

The method with which adhesion between the plastic lens substrate and the hard coat layer was evaluated is as follows.
Fig. 10 illustrates a front view and a side view of a plastic lens 1 produced by the above-described method. As illustrated. in Fig. 10, the plastic lens 1 is constituted by forming a hard coat layer 3 on the whole surface of a plastic lens substrate 2. The hard coat layer 3 may be merely a hardened film, however, it is possible to make it to double as an antireflective film. In Fig. 10, to make it understandable, the hard coat layer 3 is illustrated thick, however, in actuality, it is a film of about 2-5µm.

In evaluation of adhesion, as denoted by (a) through (f) in Fig. 10, a grid (cross-cut) 4 of 100 squares of 1.5mm-interval was formed by a razor to the hard coat layer 3 (hardened film or antireflective film) formed on the surface of the plastic lens 1, at 5-6 places in one lens sample. Then, after firmly attaching an adhesive tape (made by NICHIBAN CO., LTD., produce name: CELLOTAPE (registered trademark)) to each place where the 100-square grid 4 has been formed, the adhesive tape was rapidly peeled off, and thereafter whether detachment, of the hard coat layer 4 is present was examined. The evaluation was made based on the number of squares where peeling-off was not caused in 100 squares, that is, when the number of squares were peeling-off was not caused is 100, it is determined as that no peeling-off was caused. Further, with respect to each square where peeling-off was partially caused in the square, the degree of peeling-off was evaluated based on the ratio after the decimal point of the area in the square where peeling-off is present. For example, when film peeling-off has been caused in the area of about 1/10 in one square of 100 squares, 99.9 is shown in the Table 1.

From the result of Table 1, it was found that the plastic lens of Example 1 is superior in adhesion as in Comparative Example 1 in which an abrasive containing loose abrasive grains are used. On the other hand, it was found that adhesion cannot be obtained at all in Comparative Example 2, in which rubbing processing is not provided.

Note that according to JIS "R6010" standard, as the grain size of finely-divided powder (abrasive grains) for the abrasive measured by an electrical resistance test method, in the case of a coated abrasive of #1500, the particle diameter at 50% of a cumulative sedimentation height is prescribed as "9.7 ± 0.8µm". Note that the electrical resistance test method is prescribed in JIS "R6012".
That is, it is understood that satisfactory adhesion is obtained when rubbing is carried out using an abrasive sheet including abrasive grains each having the particle diameter of about 10µm at 50% of a cumulative sedimentation height by an electrical resistance test method.

### <Evaluation 2>

Next, regarding a case that an abrasive sheet is used for the removing member to be used in rubbing processing, evaluation of adhesion was made with respect to a case that the number of the grain size is made lager (the particle diameter of abrasive grains ifs made smaller) and the surface cleanup processing step after rubbing processing is not carried out. Note that in this evaluation, rubbing processing was carried out in a dry environment.

### [Example 2]

Three pieces of plastic lenses were made through the production steps similar to those for above-described Example 1, except that the surface cleanup processing step after rubbing processing was omitted. First, as the plastic lens substrate to be prepared in step S1, as in Example 1, a thiourethane lens substrate (refractive index ne: 1.67, produced by HOYA CORPORATION, product name: EYNOA) was used.

Next, in step 52, rubbing processing was carried out using, as the abrasive sheet, a diamond coated abrasive (produced by NORITAKE COATED ABRASIVE CO., LTD., product name: diamond coated abrasive #1(000).
In this example, rubbing processing was carried out in a dry environment. The other conditions for rubbing processing (rubbing direction, the number of times of rubbing, load at the time of rubbing) were the same as those for the above-described Sample Nos. 1-4 of Example 1. An evaluation result of adhesion in this case is shown in the following Table 2. In each of Samples 2-1, 2-2, 2-3, a grid (cross-cut) of 100 squares was formed at 6 places, the average of evaluation results with respect, to 6 grids in each lens sample is shown as "Lens Average", and the average of evaluation results of the whole lens samples of Example 2 is shown as "Average".

**Table 2**

| | Example 2 | | |
|---|---|---|---|
| Sample Name | 2-1 | 2-2 | 2-3 |
| Result | 100 | 100 | 100 |
| | 100 | 100 | 100 |
| | 100 | 100 | 100 |
| | 100 | 100 | 99.9 |
| | 100 | 100 | 99.9 |
| | 100 | 100 | 100 |
| Lens Average | 100 | 100 | 99.11 |
| Average | 99.9 | | |

From the result of Table 2 above, although the plastic lens produced as Example 2 is the one in which the rubbing step is carried out in a dry environment, it was found that superior adhesion can be obtained as in the case of Example 1 in which the rubbing step is carried out in a wet environment. Also, even in the case that the surface cleanup processing step after rubbing processing is not carried out, it was confirmed that satisfactory adhesion can be obtained.

Note that in JIS R6010, the particle diameter of a #10000 abrasive sheet is not prescribed, however, the grain size of the abrasive of the #10000 abrasive sheet in each manufacturer of abrasive sheets is such that the particle diameter at 50% of a cumulative sedimentation height by an electrical resistance test method is about 0.5µm - 1.0µm. That is, it is understood that satisfactory adhesion can be obtained when using an abrasive sheet including abrasive grains each having the particle diameter of 0.5µm - 1.0µm at 50% of a cumulative sedimentation height by an electrical resistance test method.
Also, from the results of Example 1 and Example 2, it can be said that it is possible to produce a plastic lens having satisfactory adhesion by carrying out rubbing using an abrasive sheet including abrasive grains each having the particle diameter of 10µm or below at 50% of a cumulative sedimentation height by an electrical resistance test method.

### <Evaluation 3>

Next, with respect to examples in which rubbing processing is carried out using a removing member as examples of the present invention and comparative examples in which rubbing processing is carried out using a regular wiper for spectacles, plastic lenses were made by the method accompanying alkali cleaning, and comparison was made with respect to adhesion of a hard coat layer.

### [Example 3]

Based on the above-described production steps illustrated in the flowchart of Fig. 6, two kinds of plastic lenses, three pieces each, were made using plastic lens substrates subjected to rubbing processing by two kinds of removing members.
First, as the plastic lens substrate to be prepared in step S11, as in Example 1, a thiourethane lens substrate (refractive index ne: 1.67, produced by HOYA CORPORATION, product name: EYNOA) was prepared.
Next, as step S12, the plastic lens substrate was dipped in an alkali solution to carry out chemical edge processing to the surface of the lens surface. The conditions were as follows;
Alkali solution: 10% sodium hydroxide solution
Temperature of alkali solution: 60°C
Dipping time: 100 seconds
Dipping conditions: 28kHz ultrasonic waves applied

The removing members used in the rubbing step of step S13 were a sand cloth (Samples 3-1, 3-2, 3-3) and a melamine foam (Samples 3-4, 3-5, 3-6). Using such removing members, rubbing was carried out to perform physical edging processing. In this example, for the sand cloth, a diamond coated abrasive (produced by NORITAKE COATED ABRASIVE CO., LTD., product name; diamond coated abrasive #1500) was used, and for the melamine foam, the one produced by LEC, INC. was used. The conditions for the rubbing step (rubbing direction, the number of times of rubbing, load at the time of rubbing) were the same as those for the above-described Samples Nos. 1-4, 5-8 of Example 1, respectively.

And, in step S14, a hard coat layer was formed on the plastic lens substrate. Note that the hard coat layer forming step is the same as in the above-described Example 1. The composition of the hard coat composition liquid and the adjustment method were also the same as those in Example 1. Sample Names are shown in the following Table 3 as 3-1, 3-2, and 3-3 when a sand cloth was used for the removing member, and as 3-4, 3-5, and 3-6 when a melamine foam was used for the removing member. The same evaluation based on the method shown in Fig. 10 was carried out, and in Table 3, as the evaluation result, the number of squares of each 100-square grid (cross-cut) in which film peeling off was not caused is shown. In this case also, as in Example 2, in each lens sample, a 100-sqaure grid (cross-cut) was made at 5-6 places, and the average of evaluation results with respect to 5-6 grids in each lens sample is shown as "Lens Average", and as "Average", the average of evaluation results of the lens samples made using a sand cloth and the average of evaluation results of the lens samples made using a melamine foam are shown, respectively.

**Table 3**

| | Example 3 | | | | | |
|---|---|---|---|---|---|---|
| Sample Name | 3-1 | 3-2 | 3-3 | 3-4 | 3-5 | 3-6 |
| Result | 100 | 100 | 99.9 | 97 | 100 | 99.9 |
| | 100 | 100 | 99.9 | 97 | 100 | 99.9 |
| | 100 | 100 | 99.9 | 100 | 100 | 99.5 |
| | 100 | 100 | 99.9 | 100 | 100 | 99.3 |
| | 100 | 100 | 99.9 | 100 | 100 | 99.9 |
| | 100 | 100 | 99.9 | 100 | 99.9 | - |
| Lens Average | 100 | 100 | 99.9 | 99.0 | 99.98 | 99.7 |
| Average | 99.9 | | | 99.56 | | |

### [Example 4]

Three pieces of plastic lenses were made under the same conditions and with the same production steps as those of Example 3 except that in the alkali cleaning step (step S12) of the production method of Example 3, the dipping time was changed to 180 seconds. Evaluation results of adhesion are shown in Table 4 below, with sample names shown as 4-1, 4-2, and 4-3 when a sand cloth was used for the removing member and as 4-4, 4-5, and 4-6 when a melamine foam was used for the removing member. In Sample 4-1, Sample 4-2, and Sample 4-3, a 100-square grid (cross-cut) was formed at two places, and in Sample 4-4, Sample 4-5, and Sample 4-6, a 100-square grid (cross-cut) was formed at six places, and "Lens Average" and "Average" were calculated as in Example 2 and Example 3.

**Table 4**

| | Example 4 | | | | | |
|---|---|---|---|---|---|---|
| Sample Name | 4-1 | 4-2 | 4-3 | 4-4 | 4-5 | 4-6 |
| Result | 99.5 | 99.5 | 99.5 | 100 | 100 | 100 |
| | 100 | 100 | 99.9 | 100 | 100 | 100 |
| | - | - | - | 100 | 100 | 100 |
| | - | - | - | 100 | 100 | 100 |
| | - | - | 100 | 100 | 100 | 99.5 |
| | - | - | 100 | 100 | 100 | 99.8 |
| Lens Average | 99.75 | 99.75 | 99.75 | 100 | 100 | 99.88 |
| Average | 99.75 | | | 99.96 | | |

### [Comparative Example 3]

Three pieces of plastic lenses were made with the same method as that of Example 1 except that in the rubbing step of Example 1, the plastic lens substrate was rubbed with a regular spectacle wiper (made of polyester) as the removing member. The regular spectacle wiper used in making Comparative Example is constituted of a soft material that is apparently softer than the plastic lens substrate. Sample names are shown in Table 5 below as C3-1, C3-2, and C3-3.

### [Comparative Example 4]

Three pieces of plastic lenses were made with the same method as that of Example 2 except that in the rubbing step of Example 2, the plastic lens substrate was rubbed with a regular spectacle wiper (made of polyester) as the removing member. Evaluation results of adhesion are shown in Table 5 below as in Example 2, Example 3, and Comparative Example 3, with sample names shown as C4-1, C4-2, and C4-3.

**Table 5**

| | Comparative Example 3 | | | Comparative Example 4 | | |
|---|---|---|---|---|---|---|
| Sample Name | C3-1 | C3-2 | C3-3 | C4-1 | C4-2 | C4-3 |
| Result | 100 | 85 | 85 | 100 | 60 | 99 |
| | 100 | 95 | 92 | 100 | 97 | 93 |
| | 100 | 100 | 90 | 100 | 50 | 99.9 |
| | 100 | 100 | 80 | 100 | 70 | 99.8 |
| | 100 | 100 | 90 | 100 | 99.5 | 99.8 |
| | 93 | 100 | 80 | 98 | 100 | 99.4 |
| Lens Average | 98.83 | 96.67 | 86.17 | 99.67 | 79.42 | 98.48 |
| Average | 93.89 | | | 92.52 | | |

From the results of Tables 2 through 5 above, it was found that in plastic lenses as Examples 2 through 4 subjected to rubbing processing using a removing member such as a sand cloth, a melamine foam, etc., "Average" of evaluations is kept at about 100 and adhesion is superior. On the other hand, in making Comparative Example 3 and Comparative Example 4, rubbing was carried out using a polyester spectacle wiper, and it was found out that when a soft polyester spectacle wiper is used for rubbing, "Average"' of evaluations is 95 or below and adhesion is insufficient. It is believed that this is because foreign substances adhered due to deposition in the production process cannot be sufficiently removed and surface modification to roughen the lens surface cannot be carried out by rubbing with a polyester spectacle cleaner.

### <Evaluation 4>

Next, evaluation of adhesion of a hard coat layer was carried out with respect to a case that the number of grain size when using an sheet for the removing member to be used in rubbing processing is made large, the chemical edging step with alkali cleaning, etc, is not carried out, and the surface cleanup processing step after rubbing processing is not carried out.

### [Example 5]

Plastic lenses were made through the production steps similar to those of Example 3 above except that the chemical edging step such as alkali cleaning, etc. immediately before rubbing processing was omitted. As the plastic lens substrate, as in Examples 1 through 4, a thiourethane lens substrate (refractive index ne: 1.67, produced by HOYA CORPORATION, product name: EYNOA) was used.

Note that in this example, as the removing member for carrying out rubbing processing, a diamond sand cloth was used. As the sand cloth, a diamond coated abrasive (produced by NORITAKE COATED ABRASIVE CO., LTD., product name: diamond coated abrasive #6000) was used.
The conditions for rubbing processing (rubbing direction, the number of times of rubbing, load at the time of rubbing) were similar to those in the rubbing processing described with respect to Sample Nos. 1 through 4 of Example 1. A result of evaluation of adhesion in this case is shown in Table 6 below.

**[Table 6]**

| | Example 5 | | |
|---|---|---|---|
| Sample Name | 5-1 | 5-2 | 5-3 |
| Result | 99.5 | 99.5 | 99.5 |
| | 100 | 100 | 100 |
| Lens Average | 99.75 | 99.75 | 99.75 |
| Average | 99.75 | | |

As apparent from Table 6, it was found out that in Example 5 also, adhesion between the plastic lens substrate and the hard coat layer can be sufficiently obtained. That is, even if rubbing processing is carried out without accompanying alkali cleaning, adhesion can be obtained sufficiently enough.
Accordingly, when it is applied to a plastic lens with the specification to form a primer layer, it is not necessary to consider alkali resistance for the material of the primer layer, resulting in increasing the freedom in selecting the material of the primer layer. Accordingly, when it is applied to the production method of plastic lenses such as spectacles, etc. providing a primer layer, there is an advantage that it becomes possible to select materials that are relatively inexpensive and materials that are easy to produce and handle.

As described above, according to the present invention, it is possible to secure adhesion between a plastic lens substrate and a hard coat layer, without carrying out surface modification using an abrasive containing loose abrasive grains. Because abrasive grains hardly remain on the surface of a plastic lens substrate, it becomes possible to shorten the period of time required for a surface cleanup processing step for residues after rubbing processing, i.e., simplify the surface cleanup processing step, or omit the surface cleanup processing step.

Also, by carrying out the rubbing step in a wet environment, rubbing residues slightly generated become hard to adhere to the substrate surface, and it is possible to more reliably keep clean the surface of the lens substrate immediately after rubbing. As a result, cleanup processing after rubbing processing becomes easier, and it is possible to suppress film floating caused by rubbing residues. Also, because film peeling-off originating from fine particles of rubbing residues can be effectively suppressed by carrying out the rubbing step in a wet environment, adhesion is obtained over a long period of time.

Further, because chemical change on the lens surface by means of plasma processing or alkali processing as surface modification processing as conventionally carried out is not required, it is possible to simplify preprocessing.
The primer layer has an effect of improving shock resistance besides the effect of enhancing adhesion between a hard coat layer and a lens substrate. However, the primer layer with which shock resistance can be obtained is constituted of a polyurethane resin layer, so that if alkali cleaning, ultraviolet irradiation, oxidation treatment with ozone, etc. are carried out to enhance adhesion with the hard coat layer, it is feared that the primer layer is deteriorated.
However, in the case of the present invention, because only rubbing processing is carried out using an abrasive sheet such as a sand cloth, etc., alkali cleaning, ultraviolet irradiation, surface oxidation witch ozone, etc. are not required. As a result, it is possible to form a hard coat layer without sacrificing the primer layer, so that a deterioration phenomenon of a lens substrate can be suppressed, and it becomes possible to provide a production method of plastic lenses superior in surface workability.

Note that the present invention is not limited to the configurations described in the above-described embodiments, and various alterations and changes are possible without departing from the scope of the configurations of the present invention.

### Explanation of Reference Symbols

- 1:: plastic lens
- 2:: plastic lens substrate
- 3:: hard coat layer
- 4:: grid (cross-cut)
- 5:: scratch

## Claims

1. A method for producing a plastic lens, comprising steps of:
rubbing a surface of a plastic lens substrate, using a removing member; and
forming a hard coat layer on the surface of the plastic lens substrate that has been rubbed, by a wet surface treatment,
wherein the removing member has flexibility, and is made of a hard material harder than a material of the surface of the plastic lens substrate or constructed such that a hard material harder than the material of the surface of the plastic lens substrate is fixed on a base material having flexibility.

2. The method for producing a plastic lens described in claim 1, wherein in the rubbing step, scratches are formed on the surface of the plastic lens substrate.

3. The method for producing a plastic lens described in claim 1 or 2, further comprising a step of chemical edging the plastic lens substrate before or after the rubbing step.

4. The method for producing a plastic lens described in claim 3, wherein the chemical edging step is carried out using an alkaline aqueous solution.

5. The method for producing a plastic lens described in any of claims 1 through 4, wherein the rubbing step is carried out in a wet environment.

6. The method for producing a plastic lens described in any of claims 1 through 5, further comprising a step of forming a primer layer on one surface of the plastic lens substrate.

7. The method for producing a plastic lens described in any of claims 1 through 6, wherein the member is an abrasive sheet in which abrasive grains are fixed.

8. The method for producing a plastic lens described in claim 7, wherein a particle diameter of each of the abrasive grains at 50% of a cumulative sedimentation height by an electrical resistance test method is about 0.1µm or greater and 10µm or smaller.

9. The method for producing a plastic lens described in claim 7 or 8, wherein in the abrasive the abrasive grains are fixed to a woven or unwoven cloth.

10. The method for producing a plastic lens described in any of claims 7 through to, wherein the abrasive grains are diamond.

11. The method for producing a plastic lens described in any of claims 1 through 6, wherein the removing member is a melamine resin foam body.

12. The method for producing a plastic lens described in any of claims 1 through 11, wherein the plastic lens substrate is made of a thiourethane plastic.
